# EUROPÄISCHE PATENTSCHRIFT

(11) **EP 1 748 004 B1**
(45) Veröffentlichungstag und Bekanntmachung des Hinweises auf die Patenterteilung: **19.09.2007**
(21) Anmeldenummer: 05016416.9
(22) Anmeldetag: 28.07.2005
(51) Int. Cl.: B65G 1/04, G01B 5/02, B65G 47/28

(54) **Verfahren und Vorrichtung zum Vermessen und Positionieren eines quaderförmigen Stückguts**
Method and device for measuring and positioning a cuboidal piece of goods
Procédé et dispositif pour la mesure et le positionnement d'un objet en forme d'un bloc

(43) Veröffentlichungstag der Anmeldung: 31.01.2007
(73) Patentinhaber: Rowa Automatisierungssysteme GmbH & Co. KG, 53539 Kelberg (DE)
(72) Erfinder: Hellenbrand, Christoph, 56761 Kaifenheim (DE)
(74) Vertreter: Schmidt, Frank-Michael

(56) Entgegenhaltungen:
- EP-A- 0 620 528
- DE-A1- 10 225 332
- DE-A1- 19 610 631
- DE-U1- 8 700 193
- DE-U1-2202004 004 29

## Beschreibung

Die Erfindung betrifft ein Verfahren zum Vermessen eines im wesentlichen quaderförmigen Stückguts mit sechs Begrenzungsflächen und zum Bereitstellen des Stückguts an einer vorgegebenen Position und in einer vorgegebenen Orientierung sowie eine Vorrichtung zur Ausführung eines solchen Verfahrens.

Eine automatisierte Vermessung eines im wesentlichen quaderförmigen Stückguts und dessen Bereitstellung an einer vorgegebenen Position und in einer vorgegebenen Orientierung ist vor allem dort erwünscht, wo Stückgüter dieser Art, beispielsweise Arzneimittelpackungen, automatisch in ein Stückgutlager eingelagert werden sollen. Ein automatisiertes Regallager für Arzneimittelpackungen ist beispielsweise in der Patentschrift DE 195 09 951 C2 beschrieben. Das beschriebene Stückgutlager umfaßt mehrere Regale mit ebenen Regalböden, die in unterschiedlichen Abständen angeordnet und auf denen Arzneimittelpackungen bei chaotischer Lagerorganisation abgelegt werden können. Die Regale sind dabei beispielsweise so aufgestellt, daß zwischen zwei Regalen ein Gang verbleibt, in dem sich ein computergesteuertes Bediengerät in sämtlichen drei Raumkoordinaten bewegen kann. Das Bediengerät weist Einrichtungen auf, mit denen eine Arzneimittelpackung ergriffen, transportiert und auf einem Regalboden abgelegt werden kann. Zum Einlagern einer Arzneimittelpackung wird diese beispielsweise von einem Greifer des Bediengeräts auf eine Auflageplattform des Bediengeräts gezogen und dort festgehalten. Anschließend wird die Auflageplattform des Bediengeräts zu dem gewünschten Regallagerort transportiert und vor dem Regalboden positioniert. Dann wird die Arzneimittelpackung von der Auflageplattform des Bediengeräts auf den Regalboden geschoben. Damit eine Arzneimittelpackung bei dem bekannten Regallager in einer gewünschten Orientierung (d.h. auf einer bestimmten der sechs Begrenzungsflächen des Quaders und derart, daß eine gewünschte Begrenzungsfläche zur Stirnseite des Regalbodens weist) auf dem Regalboden abgelegt werden kann, muß die Packung in einer der gewünschten Orientierung entsprechenden Orientierung an einem Übergabeort dem Bediengerät zur Verfügung gestellt werden. Bei der bekannten Anordnung übernimmt der Greifer des Bediengeräts die Arzneimittelpackung von einem ebenen Förderband, d.h., der Greifer zieht die Arzneimittelpackung von dem Förderband auf die Auflageplattform des Bediengeräts. Deshalb ist es erforderlich, die Arzneimittelpackung in einer vorgegebenen Orientierung auf das Förderband aufzulegen. Dies geschieht beispielsweise durch manuelles Auflegen der Arzneimittelpackung auf das Förderband und anschließendes Ausrichten der Kanten, wobei die Packung auf dem Förderband im wesentlichen in der Anfangsorientierung verbleibt.

Aus der Offenlegungsschrift DE 102 25 332 ist ferner ein Einlagerungspuffer für ein derartiges automatisiertes Regallager bekannt, bei der mehrere Arzneimittelpackungen an einer Beschickungsstation auf in der Art eines Paternosters umlaufende Lagerflächen zunächst ungeordnet aufgelegt werden und dann an einer Umlagerstation von einem Portalgreifer ergriffen, von der Lagerfläche abgehoben und in einer bestimmten Ausrichtung und an einer bestimmten Position wieder auf die Lagerfläche geordnet abgelegt werden. Dabei können die Arzneimittelpackungen jedoch nur in der Ebene der Lagerfläche gedreht werden, so daß diejenige Begrenzungsfläche der Arzneimittelpackung, auf der diese aufliegt, nicht geändert wird. Die nunmehr geordnet und an vorgegebenen Positionen auf der umlaufenden Lagerfläche aufliegenden Arzneimittelpackungen gelangen mit der Lagerfläche zu einer Entnahmestation, an welcher ein Lagerbediengerät, welches wiederum einen Greifer und eine Auflageplattform aufweist, die Arzneimittelpackungen einzeln entnimmt und in das Lager einsortiert.

Nachteilig bei der bekannten Anordnung ist die geringe Flexibilität, mit der die Arzneimittelpackung umorientiert werden kann.

Die Vermessung erfolgt bei der bekannten Anordnung mit Hilfe einer optischen Vermessung der Auflageflächen. Die Böden der Lagerflächen bestehen aus einem durchsichtigen oder durchscheinenden Material und werden von oben beleuchtet, so daß eine unter den Lagerflächen angeordnete optische Erfassungseinrichtung die Auflageflächen mittels der optisch erfaßten Schatten bestimmen kann. Eine weitere Einrichtung zum Erfassen von Lagerkoordinaten und/oder Abmessungen von Auflageflächen von Stückgütern ist aus der Gebrauchsmusterschrift DE 20 2004 015 264 U1 bekannt.

Die bekannten optischen Vermessungssysteme zum Erfassen der Abmessungen der Auflageflächen der Stückgüter erfordern einen relativ hohen Aufwand bei der Bildverarbeitung und der Erzeugung einer ausreichenden und Erfassungsfehler vermeidenden Beleuchtung.

Aufgabe der Erfindung ist es, eine einfache und zeitsparende Positionierung und Orientierung eines einzelnen Stückguts bei gleichzeitiger Vermessung zu ermöglichen.

Diese Aufgabe wird erfindungsgemäß durch ein Verfahren mit den Merkmalen des Patentanspruchs 1 bzw. eine Vorrichtung mit den Merkmalen des Patentanspruchs 14 gelöst.

Bei dem erfindungsgemäßen Verfahren zum Vermessen eines im wesentlichen quaderförmigen Stückguts mit sechs Begrenzungsflächen und zum Bereitstellen des Stückguts an einer vorgegebenen Position und in einer vorgegebenen Orientierung wird zunächst das Stückgut (bei dem es sich vorzugsweise um eine Arzneimittelpackung handelt) auf eine Auflageebene transportiert, so daß es auf einer (der sechs) Begrenzungsfläche aufliegt. Die Auflageebene ist beispielsweise die Oberfläche eines Auflagetischs. Dann wird das Stückgut mittels zweier über der Auflageebene zusammenfahrender Backen auf der Auflageebene solange verschoben, bis zwei parallele Innenflächen der beiden Backen an zwei einander gegenüberliegenden ersten Seitenflächen des Stückguts anliegen, so daß das Stückgut in eine vorgegebene Position (aufgrund des bekannten Fahrwegs der Backen) entlang einer zu den ersten beiden Seitenflächen senkrechten Richtung gebracht wird, wobei eine erste Abmessung des Stückguts gemessen wird. Damit das Zusammenfahren der Backen an der richtigen Stelle gestoppt wird, ist vorzugsweise ein Sensor vorgesehen, der das Anliegen der Stückgutflächen an den Innenflächen der Backen erfaßt. Anschließend wird das Stückgut mittels zweier über der Auflageebene zusammenfahrender Backen auf der Auflageebene solange verschoben, bis zwei parallele Innenflächen der beiden Backen an zwei einander gegenüberliegenden zweiten Seitenflächen des Stückguts anliegen, so daß das Stückgut in eine vorgegebene Position entlang einer zu den zweiten beiden Seitenflächen senkrechten Richtung gebracht wird, wobei eine zweite Abmessung des Stückguts gemessen wird. Bei den in diesem Schritt verwendeten Backen kann es sich um zwei weitere Backen handeln, die in einer Richtung zusammengefahren werden, die senkrecht zu der Bewegungsrichtung der zuvor verwendeten Backen verläuft. Die dabei verwendeten vier Backen dürfen sich selbstverständlich in ihrer Bewegung nicht gegenseitig stören, so daß entweder die sich in der ersten Richtung bewegenden Backen zuvor auseinandergefahren werden, bevor die sich in der zweiten Richtung bewegenden Backen zusammengefahren werden, oder die Backen übereinander angeordnet sind oder ineinander greifen, ohne sich gegenseitig zu berühren. Vorzugsweise werden jedoch dieselben beiden Backen sowohl zur Bestimmung der ersten Abmessung als auch zur Bestimmung der zweiten Abmessung verwendet, wobei das Stückgut nach einem Auseinanderfahren der Backen nach dem ersten Vermessungsschritt und vor dem Zusammenfahren der Backen im zweiten Vermessungsschritt um 90° in der Auflageebene gedreht wird. Nach dem mit Hilfe der zusammenfahrenden Backen das Stückgut in eine vorgegebene Position auf der Auflageebene gebracht und die Abmessungen der aufliegenden Begrenzungsfläche bestimmt worden sind oder auch während dieser Schritte wird eine zur ersten und zur zweiten Abmessung senkrechte dritte Abmessung gemessen. Anschließend wird das Stückgut in Abhängigkeit von den drei gemessenen Abmessungen in eine vorgegebene Orientierung auf der Auflageebene gebracht, sofern es sich noch nicht in dieser Orientierung befindet. Dies geschieht, indem das Stückgut ggf. um 90° in der Auflageebene und/oder um 90° um eine zur Auflageebene parallele Drehachse gedreht wird. Schließlich wird das in der vorgegebenen Orientierung befindliche Stückgut an die vorgegebene Position auf der Auflageebene verschoben, sofern es sich noch nicht dort befindet. Wesentliches Element der Erfindung ist die Verwendung parallel geführter Backen, die bei ihrem Zusammenfahren gleichzeitig das Stückgut in eine gewünschte Position bringen und es vermessen.

Bei einer vorteilhaften Weiterbildung der Erfindung werden die Backen symmetrisch zu einem Mittelpunkt der Auflageebene zusammengefahren, so daß das Stückgut jeweils auf der Auflageebene zentriert wird. Bei dieser bevorzugten Weiterbildung wird das Stückgut mit Hilfe eines in der Auflageebene angeordneten Drehtellers um den Mittelpunkt gedreht. Dies ermöglicht, daß das Stückgut nach dem Vermessen der beiden Abmessungen der Auflagefläche gleichzeitig symmetrisch am Mittelpunkt positioniert wird.

Bei einer bevorzugten Weiterbildung wird das Stückgut um eine zur Auflageebene parallele Drehachse gedreht, indem es mit zwei Greifbacken an zwei zur Auflageebene senkrechten Seitenflächen ergriffen und durch Drehen der Greifbacken gedreht wird, während das Stückgut von der Auflageebene abgehoben und/oder die Auflageebene abgesenkt wird. Dies ermöglicht in Kombination mit der Verwendung eines Drehtellers eine relativ schnelle Drehung des Stückguts in eine gewünschte Orientierung bei gleichzeitiger Vermessung und Positionierung mit relativ einfachen Steuerungen für die mechanischen Einrichtungen.

Weitere vorteilhafte und/oder bevorzugte Weiterbildungen der Erfindung sind in den Unteransprüchen gekennzeichnet.

Im folgenden wird die Erfindung anhand eines in der Zeichnung dargestellten bevorzugten Ausführungsbeispiels näher beschrieben. In der Zeichnung zeigen:
Figur 1A eine schematische Draufsicht auf eine Vermessungs- und Positioniervorrichtung für Arzneimittelpackungen, die das erfindungsgemäße Verfahren ausführen kann;
Figur 1B eine schematische Seitenansicht der in Figur 1A dargestellten Vorrichtung; und
Figuren 2A bis 2L schematische Draufsichten und Seitenansichten der in den Figuren 1A und 1B dargestellten Vorrichtung während verschiedener Phasen der Vermessung und Positionierung einer Arzneimittelpackung.

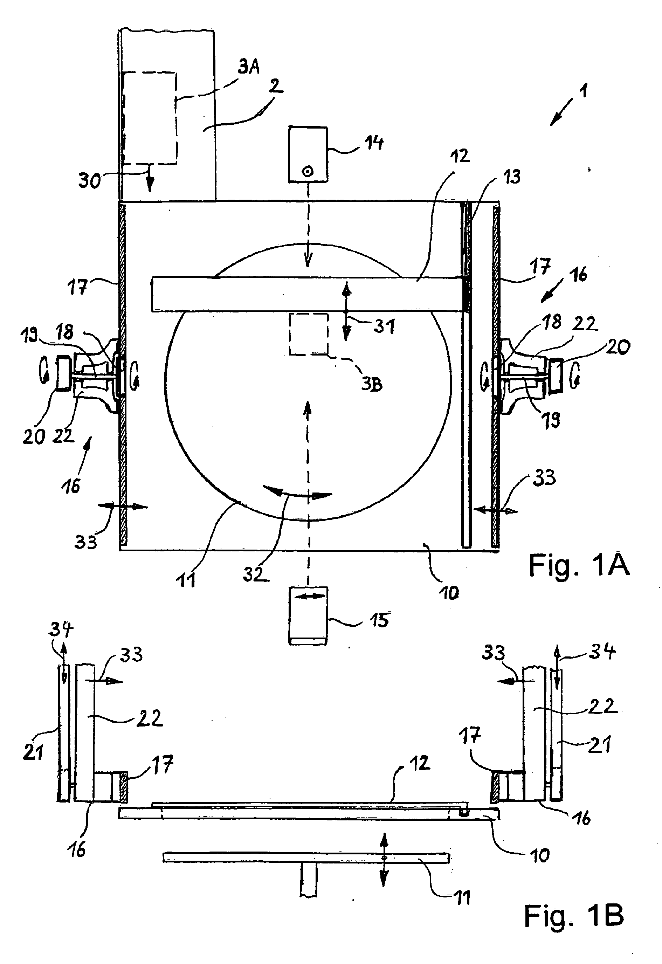

Die in den Figuren 1A und 1B schematisch dargestellte Vorrichtung 1 dient der automatisierten Erfassung der drei Abmessungen einer Arzneimittelpackung 3 (d.h. dem Vermessen) sowie dem Bereitstellen der Arzneimittelpackung 3 an einer vorgegebenen Position in einer von den drei Abmessungen der Arzneimittelpackung 3 abhängigen Orientierung derart, daß die Arzneimittelpackung an der vorgegebenen Position von einem Greifer eines Bediengeräts aufgenommen und in der gewünschten Orientierung auf einem Regalboden eines automatisierten Regallagers oder in einen Schacht eines Schachtsystems des Lagers abgelegt werden kann (die letzte Funktion wird im folgenden als Positionieren bezeichnet). Ferner dient die Vorrichtung 1 der automatisierten Erfassung einer Identifikation. Die in den Figuren 1A und 1B schematisch dargestellte Vermessungs-, Positionier- und Identifikationsvorrichtung 1 schließt sich vorzugsweise an eine vorgeschaltete Vereinzelungsvorrichtung an, die eine bestimmte Menge einzulagernder Arzneimittelpackungen unterschiedlicher Größe und Gestalt aufnimmt und einzeln über eine Fördereinrichtung 2, die in Figur 1A oben links dargestellt ist, der Vermessungs-, Positionier- und Identifikationsvorrichtung 1 zuführt. Die Fördereinrichtung 2, beispielsweise ein Förderband oder eine Rutsche, transportiert die Arzneimittelpackung 3A in die mit dem Pfeil 30 gekennzeichnete Richtung, so daß die Arzneimittelpackung schließlich auf einem Auflagetisch 10 der Vorrichtung 1 landet.

Bei der in Figur 1A dargestellten bevorzugten Ausführungsform weist der Auflagetisch 10 eine ebene Oberfläche auf, über welche in geringem Abstand sowohl ein Schieber 12 in einer ersten Richtung als auch zwei Zentrierbacken 17 in einer dazu senkrechten zweiten Richtung bewegt werden können. Sowohl der Schieber 12 als auch die Zentrierbacken 17 sind so ausgebildet und geführt, daß sie eine Arzneimittelpackung 3 in dem zu erwartenden Größenspektrum auf der Oberfläche des Auflagetischs 10 in den beiden zueinander senkrechten Richtungen verschieben können, ohne daß die Arzneimittelpackung 3 dabei gekippt oder beschädigt wird. In der Mitte des Auflagetischs 10 ist ein Drehteller 11 angeordnet, mit dessen Hilfe eine darauf aufliegende Arzneimittelpackung 3 in der Auflageebene des Auflagetischs 10 gedreht werden kann. Mit Hilfe des Schiebers 12, der Zentrierbacken 17 und des Drehtellers 11 kann die Arzneimittelpackung 3 in eine gewünschte Position auf der Auflageebene des Auflagetischs 10 gebracht werden.

Der Schieber 12 dient insbesondere dazu, die in einem Eckenbereich des Auflagetischs 10 von der Fördereinrichtung 2 her eintreffende Arzneimittelpackung 3 in eine mehr mittig angeordnete Position zu verschieben. Die Zentrierbacken 17, welche symmetrisch zu einem Mittelpunkt des Auflagetellers 11 geführt und bewegt werden können, dienen dazu, die Arzneimittelpackung 3 in der Mitte des Drehtellers 11 zu zentrieren. Gleichzeitig sind die Zentrierbacken mit einem deren Bewegung erfassenden Sensor derart gekoppelt, daß mit ihrer Hilfe der Abstand zwischen den Innenflächen der Zentrierbacken 17 und somit eine Abmessung der zwischen ihnen zentrierten Arzneimittelpackung 3 bestimmt (gemessen) werden kann. Die Zentrierbacken 17 können dabei bis auf die Außenabmessungen der Arzneimittelpackung 3 zusammengefahren werden, ohne daß eine Klemmkraft erzeugt wird. Sie können aber auch soweit zusammengefahren werden, daß sie eine gewisse Andruckkraft auf die Außenwandung der Arzneimittelpackung ausüben. Die Zentrierbacken 17 sind Bestandteil einer Zentrier- und Greifvorrichtung 16. Die Zentrier- und Greifvorrichtung umfaßt neben den Zentrierbacken 17, die sich über die gesamte Ausdehnung des Auflagetischs 10 erstrecken, zusätzlich zwei Greifbacken 18, die jeweils in der Mitte der Zentrierbacken 17 derart ausgebildet sind, daß die nach innen weisenden Oberflächen der Greifbacken 18 entweder in einer Ebene mit der nach innen weisenden Oberfläche der Zentrierbacken 17 liegen oder geringfügig über diese hinausragen, so daß sie an die Oberfläche der Arzneimittelpackung 3 angedrückt werden können. Darüber hinaus sind die Greifbacken 18 über in jeweiligen Halterungen 22 gelagerten Drehachsen 19 mit Zahnrädern 20 verbunden, die über zugehörige Zahnriemen 21 antreibbar sind. Die Halterungen 22 sind mit einem die Zentrier- und Greifvorrichtung 16 radial zum Drehteller bewegenden Antriebseinrichtung und die Zahnriemen 21 mit einer weiteren Antriebseinrichtung derart gekoppelt, daß die Zentrier- und Greifvorrichtung nicht nur in der Lage ist, die Arzneimittelpackung 3 auf dem Auflagetisch 10 zu verschieben, sondern auch in der Lage ist, die Arzneimittelpackung zwischen den Greifbacken 18 festzuklemmen und durch Drehen der Greifbacken 18 um eine zur Oberfläche des Auflagetischs 10 parallele Achse zu drehen. Um eine solche Drehung einer zwischen den Greifbacken 18 eingeklemmten Arzneimittelpackung zu ermöglichen, ist es vorgesehen, daß der Drehteller 11 mit einem Antrieb zum Absenken und Anheben gekoppelt ist. Sowohl der Antrieb zum Absenken des Drehtellers 11 als auch die Antriebe zum Bewegen des Schiebers 12, zum Schieben der Zentrierbacken 17 sowie zum Drehen der Greifbacken 18 sind in den Figuren 1A und 1B nicht dargestellt. Figur 1A zeigt lediglich beispielhaft eine Führungsnut 13, in der eine Halterung des Schiebers 12 geführt ist.

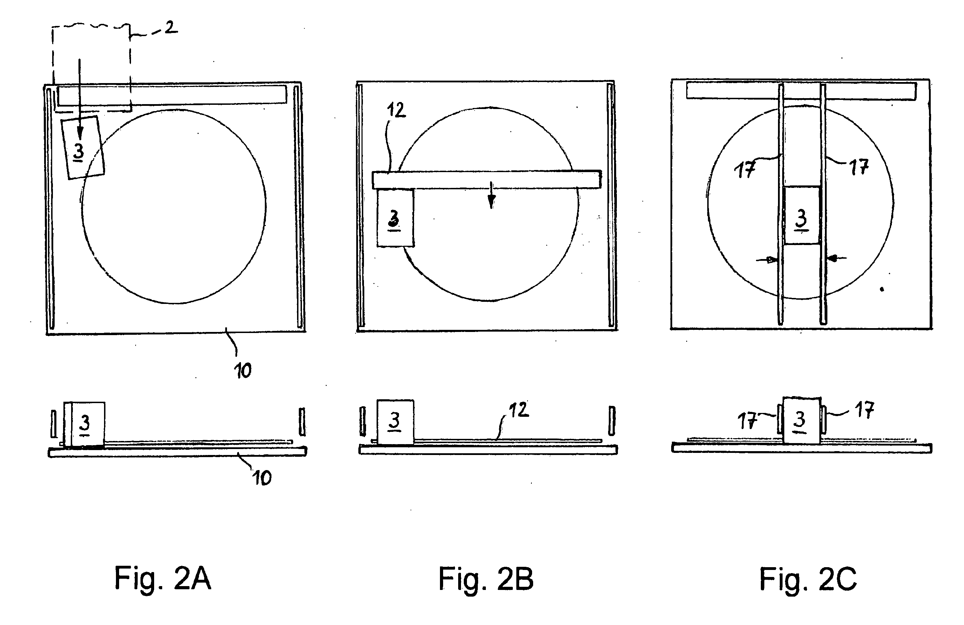

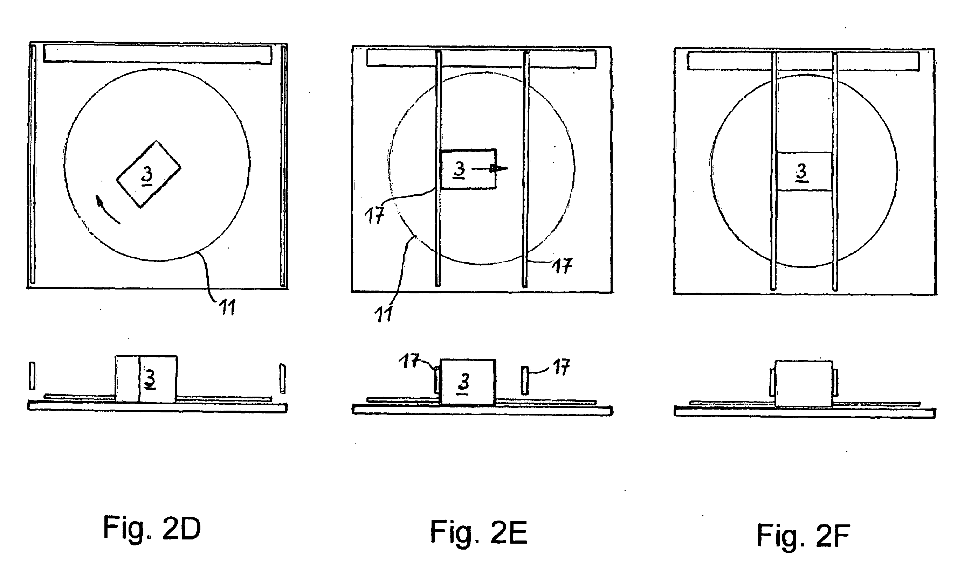

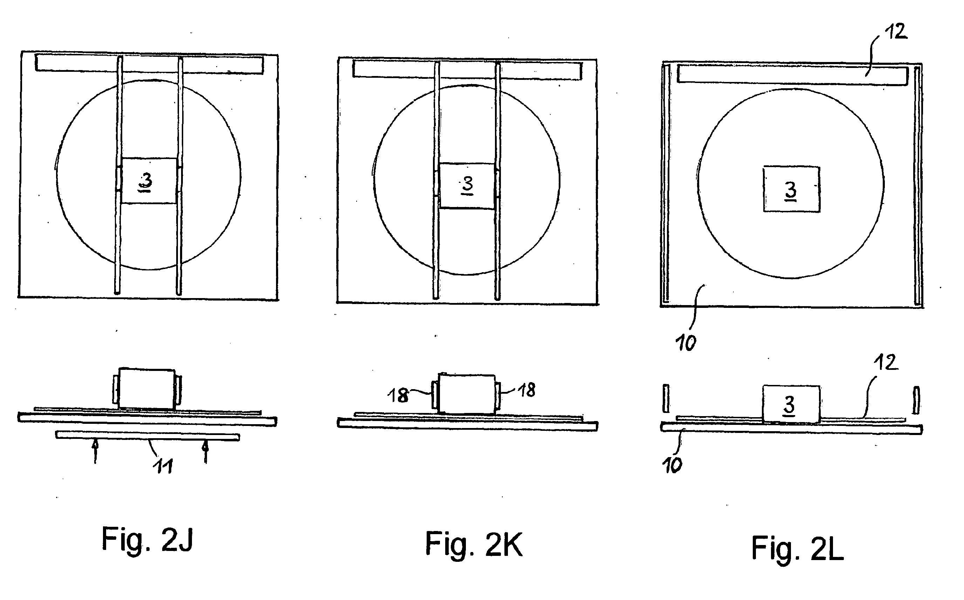

Die Vorrichtung 1 weist ferner eine optische Leseeinrichtung auf, die derart angeordnet ist, daß sie eine Identifikation erfassen kann, die auf wenigstens einer Seitenfläche der Arzneimittelpackung 3 aufgebracht ist. Bei dem in den Figuren 1A und 1B dargestellten Ausführungsbeispiel umfaßt die optische Leseeinrichtung zwei Schwingscanner, nämlich einen Schwingscanner 14 mit einer zur Auflageebene des Auflagetischs 10 senkrechten Scanrichtung und einen Schwingscanner 15 mit einer zur Auflageebene parallelen Scanrichtung. Die beiden Schwingscanner sind zudem aneinander gegenüberliegenden Seiten des Auflagetischs 10 derart angeordnet, daß sie einander gegenüberliegende Seitenflächen einer zwischen den Zentrierbacken 17 zentrierten Arzneimittelpackung abtasten können. Sowohl die beiden Schwingscanner als auch die Antriebseinrichtungen für den Schieber 12, den Drehteller 11 (Drehantrieb und Absenkantrieb) und die Zentrier- und Greifvorrichtung (Zentrierantrieb und Drehantrieb für die Greifbacken) sind mit einer computergestützten Steuereinrichtung gekoppelt. Mit der beschriebenen Anordnung ist es gleichzeitig möglich, die Verfahren des Vermessens der Arzneimittelpackung und des Positionierens/Orientierens der Arzneimittelpackung sowie des Erfassens einer Identifikation der Arzneimittelpackung bei minimalem zeitlichen und apparativen Aufwand auszuführen. Bevor ein typischer Ablauf einer bevorzugten Vermessung, Positionierung und Identifikation einer Arzneimittelpackung anhand der Figuren 2A bis 2L näher beschrieben werden soll, sei darauf hingewiesen, daß im Rahmen des Erfindungsgedankens zahlreiche alternative Ausführungsformen der Vorrichtung 1 denkbar sind.

Bei der in den Figuren 1A und 1B gezeigten Vorrichtung bewegt sich der Schieber 12 in einer Ebene unterhalb der Zentrierbacken 17. Es sind alternative Ausführungsformen denkbar, bei denen sich der Schieber in der Ebene der Zentrierbacken bewegt und dementsprechend aus deren Bewegungsbereich herausgefahren wird, wenn die Zentrierbacken 17 nach innen zusammengefahren werden. Es ist auch denkbar, daß anstelle des Schiebers 12 ein zweites Paar von Zentrierbacken verwendet wird.

Bei der dargestellten bevorzugten Ausführungsform ist die Einrichtung zum Drehen der Packung um eine zur Auflageebene parallele Achse in Form der sich drehenden Greifbacken 18 in die Zentriervorrichtung integriert. Es sind aber auch Ausführungsformen denkbar, bei denen zum Drehen der Arzneimittelpackung separate Greifer verwendet werden. Darüber hinaus kann zum Drehen der Arzneimittelpackung um 90° um eine zur Auflageebene parallele Achse auch eine Kippvorrichtung, die in den Drehteller 11 integriert ist, verwendet werden.

Anstelle der Verwendung von zwei einander gegenüberliegenden, in zwei zueinander senkrechten Ebenen schwingenden Schwingscannern könnte auch ein einziger Schwingscanner verwendet werden, der mit einer Vorrichtung zum Kippen der Schwingebene gekoppelt ist. Die beiden Schwingscanner könnten auch an derselben Seite des Auflagetischs 10 angeordnet sein.

Anstelle einer optischen Leseeinrichtung für auf der Packungsoberfläche aufgebrachte Identifikationen kann auch eine Leseeinrichtung für RFID-Tags eingesetzt werden, sofern die Arzneimittelpackung einen solchen aufweist.

Nicht in den Figuren 1A und 1B dargestellt sind zusätzliche Sensoren, die der Erfassung einer bestimmten Lage der Arzneimittelpackung oder der Vermessung einer zur Auflageebene senkrechten Abmessung dienen. Beispielsweise ist die Steuerung des Schiebers 12 vorzugsweise mit einem Sensor gekoppelt, der das Erreichen einer vorgegebenen Position der von dem Schieber geschobenen Arzneimittelpackung 3 erfaßt, woraufhin der Schieberantrieb angehalten wird. Beispielsweise wird dazu eine oberhalb des Auflagetischs 10 angeordnete Lichtschranke verwendet, welche so angeordnet ist, daß sie von der Vorderkante der von dem Schieber 12 verschobenen Arzneimittelpackung 3 unterbrochen wird, wenn die Arzneimittelpackung die vorgegebene Position der Lichtschranke erreicht. Diese Position ist so gewählt, daß sich die Arzneimittelpackung - unabhängig von deren Lage und Größe in einem mittleren Bereich des Auflagetischs befindet, wenn die Lichtschranke unterbrochen wird. Anstelle einer Lichtschranke sind auch mehrere Lichtschranken oder andere Annäherungs- oder Abstandssensoren denkbar. Zudem ist es denkbar, daß bereits beim Zuführen der Arzneimittelpackung 3 über die Fördereinrichtung 2 deren Ausdehnung in der Richtung des Pfeils 30 ermittelt wird und das ferner der von dem Schieber 12 zurückgelegte Weg erfaßt wird, so daß aus diesen erfaßten Größen der geeignete Ort zum Abschalten des Antriebs des Schiebers 12 berechnet werden kann.

Darüber hinaus kann oberhalb des Auflagetischs 10 ein Sensor angeordnet sein, der die Höhenabmessung der auf dem Auflagetisch 10 zentriert aufliegenden Arzneimittelpackung 3, beispielsweise der in Figur 1A gezeigten Arzneimittelpackung 3B, erfassen kann. Hierzu eignet sich beispielsweise ein Ultraschallsensor.

Im folgenden wird das Verfahren des Vermessens und des Positionierens/Orientierens sowie des Identifizierens einer Arzneimittelpackung anhand der Figuren 2A bis 2L näher beschrieben.

Wie in Figur 2A zu erkennen ist, wurde eine von der Fördereinrichtung 2 herangeführte Arzneimittelpackung 3 in einem Eckenbereich des Auflagetischs 10 abgelegt. Wie dargestellt, brauchen die Außenkanten der Auflagefläche der Arzneimittelpackung 3 nicht zu den Bewegungsrichtungen des Schiebers 12 bzw. der Zentrierbacken 17 ausgerichtet zu sein. Die Arzneimittelpackung 3 liegt mit einer beliebigen ihrer sechs Begrenzungsflächen auf dem Auflagetisch 10 auf. Die Arzneimittelpackung 3 soll nachfolgend vermessen und in einer vorgegebenen Orientierung an eine vorgegebene Position (Übergabeposition) gebracht werden.

Wie in Figur 2B dargestellt ist, wird zunächst der Schieber 12 in eine erste Richtung bewegt, wobei er die Arzneimittelpackung 3 in der ersten Richtung soweit schiebt, bis diese eine etwa mittige Position auf dem Auflagetisch 10 erreicht. Beispielsweise wird der Schieber 12 solange bewegt, bis eine Vorderkante der Arzneimittelpackung 3 eine Lichtschranke unterbricht. Die Lichtschranke kann an einem festen Ort positioniert sein; sie kann aber auch entlang der ersten Richtung verschiebbar angeordnet sein und in Abhängigkeit von einer zuvor während des Transports auf der Fördereinrichtung 2 grob erfaßten Abmessung der Arzneimittelpackung 3 positioniert werden.

Der Schieber wird dann in seine Ausgangsposition zurückgefahren, wie es in Figur 2C zu erkennen ist. Anschließend oder gleichzeitig werden die Zentrierbacken 17 in einer zur ersten Richtung senkrechten zweiten Richtung zusammengefahren, wobei sie die Arzneimittelpackung 3 auf dem Auflagetisch 10 in dieser zweiten Richtung zentrieren.

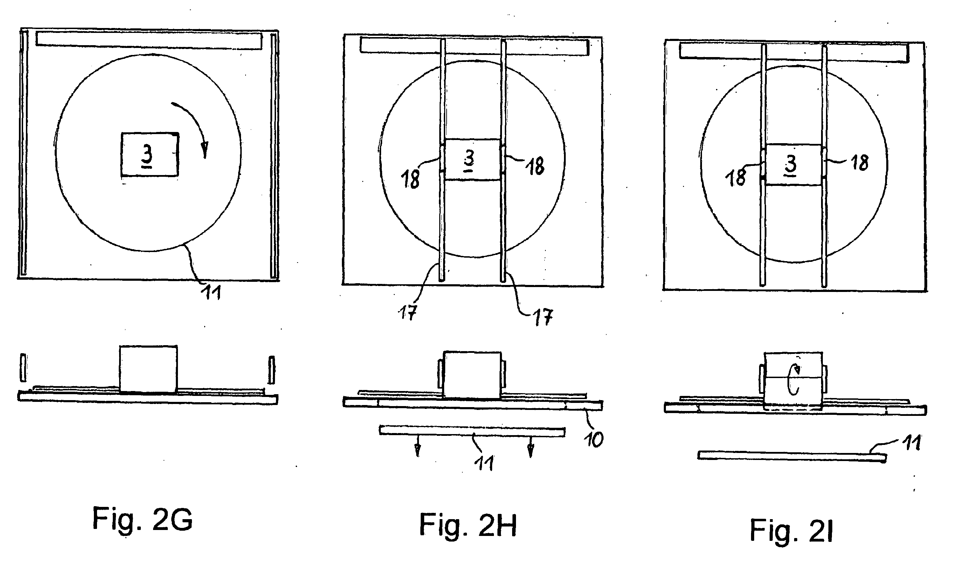

Anschließend werden die Zentrierbacken 17 wieder in ihre Ausgangsposition entlang der zweiten Richtung zurückgefahren. Dann wird der Drehteller 11 des Auflagetischs 10 gedreht, wie es in Figur 2B gezeigt ist. Der Drehteller wird um 90° gedreht. Anschließend werden wiederum die Zentrierbacken 17 in der zweiten Richtung zusammengefahren, so daß nunmehr die Arzneimittelpackung 3 in der Mitte des Drehtellers 11 zentriert wird, wie es in den Figuren 2E und 2F gezeigt ist. Anschließend werden die Zentrierbacken 17 wieder auseinandergefahren. Es ergibt sich schließlich die in Figur 2G dargestellte Anordnung, bei der die Arzneimittelpackung 3 in der Mitte des Drehtellers 11 zentriert frei aufliegt.

Parallel zu den ersten Schritten des Positionierens und Vermessens kann mit dem Identifizieren der Arzneimittelpackung begonnen werden, beispielsweise mit dem Auslesen eines RFID-Tags oder mit dem Lesen einer optisch lesbaren Identifikation.

Ein Erfassen einer auf dem zur Auflageebene des Tisches 10 senkrechten Seitenflächen aufgebrachten optischen Kennzeichnung (Barcode) kann bei dem in Figur 2G dargestellten Zustand beginnen; die Erfassung der Barcodes kann aber auch bereits in der in Figur 2C dargestellten Phase beginnen, sofern die Tiefenschärfe der Scanner ausreicht, um die auf den ihnen jeweils zugewandten Seitenflächen aufgebrachten Barcodes bereits dann zu erkennen, wenn die Arzneimittelpackung 3 noch nicht vollständig zentriert ist. So könnten bereits in der Phase der Figur 2C die in Figur 1A dargestellten Schwingscanner 14 und 15 die gegebenenfalls auf den ihnen zugewandten Seitenflächen der Arzneimittelpackung 3 vorhandenen Barcodes lesen. Wird dabei ein Barcode erfaßt und läßt sich dieser eindeutig identifizieren, so wäre bereits der Schritt des Identifizierens abgeschlossen. Anschließend, nämlich in den in den Figuren 2E und 2F dargestellten Phasen könnten die Schwingscanner 14 und 15 jeweils eine weitere Seitenfläche abtasten, so daß bereits vor Erreichen des in Figur 2G dargestellten vollständig zentrierten Zustands von den Schwingscannern 14 und 15 jeweils zwei Seiten abgetastet worden sind.

Unter der Annahme, daß der auf wenigstens einer der sechs Seitenflächen der quaderförmigen Arzneimittelpackung 3 aufgebrachte Barcode zumindest näherungsweise zu einer Seitenkante der Arzneimittelpackung ausgerichtet ist, ist es mit Hilfe der beiden einander gegenüberliegenden Schwingscanner 14 und 15, die zueinander senkrecht orientierte Abtastrichtungen aufweisen, im worst case denkbar, das fünf Umpositionierbewegungen der Arzneimittelpackung erforderlich werden, bis schließlich die Seitenfläche, auf der der Barcode aufgebracht ist, dem entsprechend orientierten Schwingscanner zugewandt ist. Beispielsweise kann es sein, daß die Arzneimittelpackung zunächst dreimal um jeweils 90° von dem Drehteller 11 gedreht wird, ohne daß dabei bereits ein Barcode von einem der Schwingscanner erfaßt worden ist, so daß anschließend noch die Oberseite und die Auflagefläche der Arzneimittelpackung 3 jeweils von beiden Schwingscannern abzutasten sein können. Dazu ist die Arzneimittelpackung zumindest einmal um etwa 90° um eine zur Auflageebene parallele Achse zu drehen und anschließend noch einmal um etwa 180° (entweder wieder um eine zur Auflageebene parallele Achse oder um eine zur Auflageebene senkrechte Achse, d.h. mit Hilfe des Drehtellers) zu drehen.

Wenn das Verfahren in der in Figur 2G dargestellten Phase angelangt ist, sind gegebenenfalls von beiden Schwingscannern 14 und 15 bereits zwei Seitenflächen abgetastet, so daß jeweils lediglich zwei weitere Seitenflächen abgetastet werden müssen, bevor sich gegebenenfalls ein Drehen der Arzneimittelpackung um eine zur Auflageebene parallele Achse erforderlich macht. Dieses zweimalige Drehen der Arzneimittelpackung mittels des Auflagetellers derart, daß beide Schwingscanner schließlich sämtliche zur Auflagefläche 10 senkrechten vier Seitenflächen abgetastet haben, wird während der in Figur 2G dargestellten Phase durchgeführt. Dabei wird selbstverständlich das weitere Drehen der Arzneimittelpackung 3 und das weitere Abtasten der Seitenflächen nur dann durchgeführt, wenn nicht bereits zuvor ein Barcode erfaßt worden ist. Am Ende der Phase, die in Figur 2G schematisch dargestellt ist, sind sämtliche zum Auflagetisch 10 senkrechten vier Seitenflächen der Arzneimittelpackung abgetastet. Darüber hinaus sind aufgrund des Zusammenfahrens der Zentrierbacken (vergleiche Figur 2C und Figur 2F) bereits die Dimensionen der Auflagefläche der Arzneimittelpackung erfaßt.

Ein Erfassen der zur Auflagefläche 10 senkrechten Abmessung der Arzneimittelpackung 3 kann bei einer Ausführungsform gleichzeitig mit Hilfe eines Ultraschallsensors ausgeführt werden. In diesem Fall sind nach Abschluß des in Figur 2G dargestellten Schrittes bereits sämtliche drei Abmessungen der Arzneimittelpackung 3 bekannt. Dann kann die Steuereinrichtung ausgehend von diesen drei Abmessungen bestimmen, ob die Arzneimittelpackung zum Herstellen der gewünschten Orientierung gegebenenfalls noch um eine zum Auflagetisch 10 senkrechte Achse und/oder um eine zum Auflagetisch parallele Achse gedreht werden muß.

Sollte sich ein Drehen um eine zur Auflageebene des Auflagetischs 10 parallele Achse erforderlich machen, weil entweder die Arzneimittelpackung 3 noch nicht die gewünschte Orientierung erreicht hat oder weil - bei optischer Identifizierung - nach Abschluß der Phase gemäß Figur 2G noch keine Identifikation (Barcode) erfaßt worden ist, so schließen sich gegebenenfalls die in den Figuren 2H bis 2L gezeigten Phasen an.

Wie es in Figur 2H gezeigt ist, werden die Greifbacken 18 der Zentrier- und Greifvorrichtung 16 soweit zusammengefahren, daß die Arzneimittelpackung 3 zwischen ihnen eingeklemmt wird. Dann wird der Drehteller 11 nach unten heruntergefahren, so daß die Arzneimittelpackung 3 lediglich von den Greifbacken 18 gehalten wird. Anschließend steuert ein Antrieb die in Figur 1B dargestellten Zahnriemen 21 und somit die Zahnräder 20 derart an, daß die Arzneimittelpackung 3 um eine zur Auflageebene des Auflagetischs 10 parallele Achse gedreht wird. Dies ist in Figur 2I dargestellt. Die Arzneimittelpackung wird vorzugsweise um etwa 90° gedreht, so daß diejenigen Begrenzungsflächen der Arzneimittelpackung 3, die zuvor parallel zur Auflageebene des Auflagetischs 10 orientiert waren, nunmehr den Schwingscannern 14 und 15 zugewandte Seitenflächen bilden. Unmittelbar am Ende dieser 90°-Drehbewegung können die Schwingscanner gegebenenfalls auf diesen Flächen angeordnete Barcodes erfassen. Sofern auch nach der 90°-Drehung noch kein Barcode erfaßt werden kann, weist die Steuereinrichtung der Vorrichtung 1 die Antriebe zum Drehen der Greifbacken 18 an, die Arzneimittelpackung um 180° weiter oder zurück zu drehen, so daß dann auch die jeweils letzten Seitenflächen von den Scannern 14 und 15 abgetastet werden können. Alternativ können der Auflageteller wieder nach oben gefahren und die Greifbacken 18 auseinandergefahren werden, so daß die Arzneimittelpackung in der nach der 90°-Drehung erreichten Orientierung auf dem Auflageteller zurückfällt, wie es in den Figuren 2J bis 2L dargestellt ist. Hierbei werden die Greif- und Zentrierbacken 18 und 17 wieder in die Ausgangsposition zurückgefahren, wie es in Figur 2L gezeigt ist. Anschließend kann der Drehteller veranlaßt werden, eine 180°-Drehung auszuführen, um das Abtasten der verbleibenden Seitenflächen durch die Schwingscanner 14 und 15 zu ermöglichen.

Sofern keine Sensoreinrichtung zum Messen der Abmessung der Arzneimittelpackung 3 in der zur Auflageebene des Auflagetischs 10 senkrechten Richtung vorhanden ist, schließt sich an den Schritt, der in Figur 2L gezeigt ist, eine 90°-Drehung der Arzneimittelpackung durch den Drehteller 11 an, woraufhin die Zentrierbacken 17 erneut auf die Arzneimittelpackung zusammengefahren werden, um die verbleibende dritte Abmessung zu erfassen. Nach diesen Schritten bzw. nach der in Figur 2L dargestellten Phase sollten sowohl die Identifikation als auch sämtliche Abmessungen der Arzneimittelpackung erfaßt sein. Wenn dies nicht der Fall ist, so ist ein Fehler aufgetreten. Bei Feststellung eines Fehlers könnten die Schritte des Scannens der Identifikation und des Vermessens wiederholt werden. Alternativ und/oder anschließend kann die Arzneimittelpackung aussortiert werden.

Nach Abschluß der in Figur 2L dargestellten Phase befindet sich die Arzneimittelpackung möglicherweise noch nicht in derjenigen Position und Orientierung, an bzw. in der sie von dem Bediengerät aufgenommen werden soll. Gegebenenfalls sind noch weitere Drehbewegungen mit Hilfe des Drehtellers 11 und/oder der Greifbacken 18 erforderlich. Sofern die Arzneimittelpackung 3 von dem Greifer des Bediengeräts nicht in der zentrierten Position, sondern am Rande der Auflagefläche 10 aufgenommen werden soll, wird der Schieber 12 nach Abschluß des Identifizierens, Vermessens und Orientierens der Arzneimittelpackung 3 veranlaßt, diese gegebenenfalls an den Rand der Auflagefläche 10 zu verschieben, wo sie von dem Greifer des Bediengeräts ergriffen werden kann.

## Patentansprüche

1. Verfahren zum Vermessen eines im wesentlichen quaderförmigen Stückguts (3) mit sechs Begrenzungsflächen und zum Bereitstellen des Stückguts (3) an einer vorgegebenen Position und in einer vorgegebenen Orientierung, wobei:
a) das Stückgut (3) auf eine Auflageebene (10) transportiert wird, so daß es auf einer Begrenzungsfläche aufliegt,
b) das Stückgut mittels zweier über der Auflageebene (10) zusammenfahrender Backen (17) auf der Auflageebene (10) solange verschoben wird, bis zwei parallele Innenflächen der beiden Backen (17) an zwei einander gegenüberliegenden ersten Seitenflächen des Stückguts (3) anliegen, so daß das Stückgut in eine vorgegebene Position entlang einer zu den ersten beiden Seitenflächen senkrechten Richtung gebracht wird, wobei eine erste Abmessung des Stückguts gemessen wird,
c) das Stückgut mittels zweier über der Auflageebene (10) zusammenfahrender Backen (17) auf der Auflageebene (10) solange verschoben wird, bis zwei parallele Innenflächen der beiden Backen (17) an zwei einander gegenüberliegenden zweiten Seitenflächen des Stückguts anliegen, so daß das Stückgut in eine vorgegebene Position entlang einer zu den zweiten beiden Seitenflächen senkrechten Richtung gebracht wird, wobei eine zweite Abmessung des Stückguts gemessen wird,
d) eine zur ersten und zur zweiten Abmessung senkrechte dritte Abmessung gemessen wird,
e) das Stückgut (3) in Abhängigkeit von den drei gemessenen Abmessungen in eine vorgegebene Orientierung auf der Auflageebene (10) gebracht wird, sofern es sich noch nicht in dieser Orientierung befindet, indem es gegebenenfalls um 90° in der Auflageebene und/oder um 90° um eine zur Auflageebene parallele Drehachse gedreht wird, und
f) das in der vorgegebenen Orientierung befindliche Stückgut an die vorgegebene Position auf der Auflageebene verschoben wird, sofern es sich noch nicht dort befindet.

2. Verfahren nach Anspruch 1, **dadurch gekennzeichnet, daß** im Schritt b) die erste Abmessung aus einer aus dem Abstand der beiden Backen (17) abgeleiteten Meßgröße bestimmt wird.

3. Verfahren nach Anspruch 1 oder 2, **dadurch gekennzeichnet, daß** im Schritt c) die zweite Abmessung aus einer aus dem Abstand der beiden Backen (17) abgeleiteten Meßgröße bestimmt wird.

4. Verfahren nach einem der Ansprüche 1 bis 3, **dadurch gekennzeichnet, daß** in den Schritten b) und c) dieselben Backen (17) verwendet werden und das Stückgut nach einem Auseinanderfahren der Backen nach dem Schritt b) und vor dem Zusammenfahren der Backen im Schritt c) um 90° in der Auflageebene gedreht wird.

5. Verfahren nach Anspruch 4, **dadurch gekennzeichnet, daß** in den Schritten b) und c) die Backen (17) symmetrisch zu einen Mittelpunkt der Auflageebene zusammenfahren, so daß das Stückgut jeweils auf der Auflageebene zentriert wird.

6. Verfahren nach Anspruch 5, **dadurch gekennzeichnet, daß** das Stückgut mit Hilfe eines in der Auflageebene angeordneten Drehtellers (11) um den Mittelpunkt gedreht wird.

7. Verfahren nach einem der Ansprüche 1 bis 6, **dadurch gekennzeichnet, daß** die dritte Abmessung im Schritt d) mit Hilfe eines über der Auflageebene angeordneten Wegsensors, der die Relativlage der oberen Begrenzungsfläche des Stückguts gegenüber der Auflageebene erfaßt, bestimmt wird.

8. Verfahren nach einem der Ansprüche 1 bis 7, **dadurch gekennzeichnet, daß** das Stückgut im Schritt e) um eine zur Auflageebene parallele Drehachse gedreht wird, indem es mit zwei Greifbacken (18) an zwei zur Auflageebene senkrechten Seitenflächen ergriffen und durch Drehen der Greifbacken (18) gedreht wird, während das Stückgut von der Auflageebene abgehoben und/oder die Auflageebene abgesenkt wird.

9. Verfahren nach Anspruch 8, **dadurch gekennzeichnet, daß** die dritte Abmessung im Schritt d) bestimmt wird, indem
d1) das Stückgut um eine zur Auflageebene parallele Drehachse um etwa 90° gedreht wird, indem es mit zwei Greifbacken (18) an zwei zur Auflageebene (10) senkrechten Seitenflächen ergriffen und durch Drehen der Greifbacken (18) gedreht wird, während das Stückgut von der Auflageebene abgehoben und/oder die Auflageebene abgesenkt wird,
d2) das Stückgut auf die Auflageebene abgelegt und in der Auflageebene um 90° gedreht wird, und
d3) das Stückgut mittels zweier über der Auflageebene zusammenfahrender Backen (17) auf der Auflageebene solange verschoben wird, bis zwei parallele Innenflächen der beiden Bakken an zwei einander gegenüberliegenden dritten Seitenflächen des Stückguts anliegen, wobei die dritte Abmessung des Stückguts gemessen wird.

10. Verfahren nach einem der Ansprüche 1 bis 9, **dadurch gekennzeichnet, daß** eine Identifikation des Stückguts erfaßt wird, während sich das Stückgut auf der Auflageebene befindet.

11. Verfahren nach Anspruch 10, **dadurch gekennzeichnet, daß** eine Identifikation erfaßt wird, indem mit Hilfe einer Leseeinrichtung eine auf der Oberfläche des Stückguts aufgebrachte optisch lesbare Identifikation erfaßt wird.

12. Verfahren nach Anspruch 10, **dadurch gekennzeichnet, daß** die Identifikation durch Auslesen eines in oder auf dem Stückgut angeordneten RFID-Tags erfaßt wird.

13. Verfahren nach Anspruch 11 oder 12, **dadurch gekennzeichnet, daß** die Identifikation während der Schritte a) oder b) erfaßt wird und mit Hilfe der erfaßten Identifikation Abmessungsdaten aus einer Datenbank gewonnen und die gemessenen Abmessungen mit Hilfe der Abmessungsdaten überprüft werden.

14. Vorrichtung zum Vermessen eines im wesentlichen quaderförmigen Stückguts (3) mit sechs Begrenzungsflächen und zum Bereitstellen des Stückguts (3) an einer vorgegebenen Position und in einer vorgegebenen Orientierung, aufweisend:
einen drehbaren Auflageteller (11) mit einer Auflageebene zur Aufnahme des Stückguts, wobei die die Auflageebene bildende Oberseite des Auflagetellers so ausgebildet ist, daß das Stückgut darauf verschoben werden kann,
eine Fördereinrichtung (2, 12) zum Fördern eines einzelnen Stückguts auf den drehbaren Auflageteller (11),
ein Paar von über der Auflageebene (10) in einer ersten Richtung zusammen- und auseinanderfahrbarer Backen (17), die sich in einer zur ersten Richtung senkrechten zweiten Richtung über die gesamte Breite des Auflagetellers erstrecken, wobei die Backen mit einer Einrichtung zum Bestimmen des Abstands der parallelen Innenflächen der beiden Backen gekoppelt sind,
eine Vorrichtung zum Drehen des Stückguts um eine zur Auflageebene parallele Achse, und
eine Steuereinrichtung, die mit einem Antrieb des Auflagetellers, einem Antrieb der Backen, der Einrichtung zum Erfassen des Abstands der Innenflächen der Backen und der Greifeinrichtung gekoppelt ist.

15. Vorrichtung nach Anspruch 14, **dadurch gekennzeichnet, daß** die Greifeinrichtung zwei Greifbacken (18) aufweist, wobei jede der Greifbacken (18) in der Mitte einer zugehörigen Backe (17) derart angeordnet ist, daß die nach innen weisende Fläche der Greifbacke (18) im wesentlichen in einer Ebene mit der nach innen weisenden Oberfläche der Backe (17) angeordnet ist.

16. Vorrichtung nach Anspruch 14 oder 15, **dadurch gekennzeichnet, daß** der Auflageteller (11) derart absenkbar ist, daß ein von den Greifbacken (19) ergriffenes Stückgut um eine zur Auflageebene parallele Achse drehbar ist, ohne daß die Greifeinrichtung mit dem Stückgut angehoben zu werden braucht.

## Claims

1. A method for measuring an essentially cuboid package (3) with six boundary surfaces and for positioning the package (3) at a stipulated position and in a stipulated orientation, whereby:
a) the package (3) is transported on a support plane (10) so that it lies on a boundary surface,
b) the package is pushed on the support plane (10) by means of two jaws (17) coming together above the support plane (10) until two parallel inside surfaces of the two jaws (17) lie against two opposite first side surfaces of the package (3), so that the package is brought into a stipulated position along a direction perpendicular to the first two side surfaces, whereby a first dimension of the package is measured,
c) the package is pushed on the support plane (10) by means of two jaws (17) coming together over the support plane (10) until two parallel inside surfaces of the two jaws (17) lie against two opposite side surfaces of the package, so that the package is brought into a stipulated position along a direction perpendicular to the two second side surfaces, whereby a second dimension of the package is measured,
d) a third dimension, perpendicular to the first and second dimensions, is measured,
e) the package (3), depending on the three measured dimensions, is brought into a stipulated orientation on the support plane (10), if it is not yet in this orientation, by rotating it, optionally by 90°, in the support plane and/or by 90° about the axis of rotation parallel to the support plane, and
f) the package in the stipulated orientation is pushed to the stipulated position on the support plane, if it is not yet there.

2. A method according to Claim 1, **characterised in that** in step b), the first dimension is determined from a measurement quantity derived from the spacing of the two jaws (17).

3. A method according to Claim 1 or 2, **characterised in that** in step c), the second dimension is determined from a measured quantity derived from the spacing of the two jaws (17).

4. A method according to one of Claims 1 through 3, **characterised in that** in steps (b) and c), the same jaws (17) are used and the package, after the separation of the jaws after step b) and before the closing of the jaws in step c), is rotated by 90° in the support plane.

5. A method according to Claim 4, **characterised in that** in steps b) and c), the jaws (17) are brought together symmetrically to a centre point of the support plane, so that the package is centered on the support plane.

6. A method according to Claim 5, **characterised in that** the package is rotated about the centre point by means of a rotary table (11) arranged on the support plane.

7. A method according to one of Claims 1 through 6, **characterised in that** the third dimension in step d) is determined by means of a path sensor arranged above the support plane, which identifies the relative position of the upper boundary surface of the package with respect to the support plane.

8. A method according to one of the Claims 1 to 7, **characterised in that** the package in step e) is rotated about an axis of rotation parallel to the support plane by being gripped with two gripping jaws (18) on two side surfaces perpendicular to the support plane and being rotated by the gripping jaws (18), while the package is raised from the support plane and/or lowered to the support plane.

9. A method according to Claim 8, **characterised in that** the third dimension in step d) is determined by
d1) rotating the package about an axis of rotation parallel to the support plane by about 90°, gripping it with two gripping jaws (18) on two side surfaces perpendicular to support the plane (10) and by rotating it by rotation of the gripping jaws (18) while the package is raised from the support plane and/or lowered to the support plane,
d2) placing the package on the support plane and rotating it by 90° in the support plane, and
d3) pushing the package on the support plane by means of two jaws (17) brought together above the support plane until two parallel inside surfaces of the two jaws lie against two opposite third side surfaces of the package, during which the third dimension of the package is measured.

10. A method according to one of Claims 1 through 9, **characterised in that** an identification of the package is detected while the package is on the support plane.

11. A method according to Claim 10, **characterised in that** an identification is detected by detecting an optically readable identification applied to the surface of the package by means of a reading device.

12. A method according to Claim 10, **characterised in that** the identification is detected by reading an RFID tag arranged in or on the package.

13. A method according to Claim 11 or 12, **characterised in that** the identification is detected during step a) or b) and dimension data recovered from a database by means of the detected identification and the measured dimensions are checked by means of the dimension data.

14. A device for measuring an essentially cuboid package (3) with six boundary surfaces and for positioning the package (3) at a stipulated position in a stipulated orientation, having:
a rotating support table (11) with a support plane to accommodate the package, whereby the top of the support table forming the support plane is designed so that the package can be pushed on it,
a conveyor device (2, 12) to convey an individual package to the rotating support table (11),
a pair of jaws (17) that can be brought together and separated above the support plane (10) in a first direction, which extends in a second direction perpendicular to the first direction above the entire width of the support table, whereby the jaws are coupled to a device to determine the distance of the parallel inside surfaces of the two jaws,
a device to rotate the package about an axis parallel to the support plane, and
a control device connected to a drive of the support table, a drive of the jaws, the device to identify the distance of the inside surfaces of the jaws, and the gripping device.

15. A device according to Claim 14, **characterised in that** the gripping device has two gripping jaws (18), whereby each of the gripping jaws (18) is arranged in the centre of a corresponding jaw (17), so that the inward-facing surface of gripping jaw (18) is arranged essentially in a plane with the inward-facing surface of jaw (17).

16. A device according to Claim 14 or 15, **characterised in that** the support table (11) can be lowered so that a package gripped by the gripping jaws (19) can be rotated about an axis parallel to the support plane, without the gripping device having to be raised with the package.

## Revendications

1. Procédé de mesure d'une marchandise en vrac (3) essentiellement parallélépipédique avec six surfaces de délimitation et pour la mise à disposition de la marchandise en vrac (3) à une position prédéfinie et dans une orientation prédéfinie :
a) la marchandise en vrac (3) étant transportée sur une surface de support (10) de façon à ce qu'elle repose sur une surface de délimitation,
b) la marchandise en vrac étant déplacée au dessus de la surface de support (10) au moyen de deux mâchoires (17) se déplaçant conjointement sur la surface de support (10) jusqu'à ce que les deux surfaces intérieures parallèles des deux mâchoires (17) jouxtent deux premières surfaces latérales opposées de la marchandise en vrac (3), de sorte que la marchandise en vrac soit placée dans une position prédéfinie dans le sens perpendiculaire le long des deux premières surfaces latérales, une première mesure de la marchandise en vrac étant effectuée,
c) la marchandise en vrac étant déplacée au dessus de la surface de support (10) au moyen de deux mâchoires (17) se déplaçant conjointement sur la surface de support (10) jusqu'à ce que deux surfaces intérieures parallèles des deux mâchoires (17) jouxtent deux premières surfaces latérales opposées de la marchandise en vrac, de sorte que la marchandise en vrac soit placée dans une position prédéfinie dans le sens perpendiculaire le long des deux deuxièmes surfaces latérales, une deuxième mesure de la marchandise en vrac étant effectuée,
d) une troisième mesure perpendiculaire étant effectuée pour la première et la deuxième mesure,
e) la marchandise en vrac (3), étant placée en rapport avec les trois mesures sur une orientation prédéfinie sur une surface de support (10), dès lors que celle-ci ne se trouve pas encore dans cette orientation, en lui faisant éventuellement effectuer une rotation de 90° sur une surface de support et/ou de 90° autour d'un axe de rotation parallèle à la surface de support, et
f) que la marchandise en vrac se trouvant dans l'orientation prédéfinie est déplacée sur la position prédéfinie dès lors que celle-ci ne s'y trouve pas encore.

2. Procédé selon la revendication 1, **caractérisé en ce que**, dans l'étape b), la première mesure est déterminée à partir d'une grandeur mesurée relative à la distance des deux mâchoires (17).

3. Procédé selon la revendication 1 ou 2, **caractérisé en ce que**, dans l'étape c), la deuxième mesure est déterminée à partir d'une grandeur mesurée relative à la distance des deux mâchoires (17).

4. Procédé selon l'une des revendications 1 à 3, **caractérisé en ce que**, dans les étapes b) et c), ce sont les mêmes mâchoires (17) qui sont utilisées et que la marchandise en vrac est tournée de 90° sur la surface de support après une séparation des mâchoires selon l'étape b) et avant le déplacement conjoint des mâchoires dans l'étape c).

5. Procédé selon la revendication 4, **caractérisé en ce que**, dans les étapes b) et c), les mâchoires (17) se déplacent conjointement et symétriquement à un point central de la surface de support, de sorte que la marchandise en vrac est respectivement centrée sur la surface de support.

6. Procédé selon la revendication 5, **caractérisé en ce que**, la marchandise en vrac est tournée autour du point central au moyen d'un plateau tournant (11) ordonné sur la surface de support.

7. Procédé selon l'une des revendications 1 à 6, **caractérisé en ce que** la troisième mesure dans l'étape d) est déterminée à l'aide d'un capteur de déplacement disposé au dessus de la surface de support, lequel détecte la position relative de la surface de délimitation supérieure de la marchandise en vrac par rapport à la surface de support.

8. Procédé selon l'une des revendications 1 à 7, **caractérisé en ce que** la marchandise en vrac dans l'étape e) est tournée autour d'un axe de rotation parallèle à la surface de support, tandis qu'elle est agrippée par deux mâchoires de prise (18) sur deux surfaces latérales perpendiculaires à la surface de support et que celle-ci est tournée du fait de la rotation des mâchoires de prise (18), tandis que la marchandise en vrac est levée de la surface de support et/ou que la surface de support est abaissée.

9. Procédé selon la revendication 8, **caractérisé en ce que**, la troisième mesure est déterminée dans l'étape d), tandis que
d1) la marchandise en vrac est tournée d'environ 90° autour d'un axe de rotation parallèle à la surface de support, tandis qu'elle est agrippée par deux mâchoires de prise (18) sur deux surfaces latérales perpendiculaires à la surface de support (10) et que celle-ci est tournée du fait de la rotation des mâchoires de prise (18), tandis que la marchandise en vrac est levée de la surface de support et/ou que la surface de support est abaissée.
d2) que la marchandise en vrac est déposée sur la surface de support et tournée de 90° sur la surface de support, et
d3) que la marchandise en vrac est déplacée au moyen de mâchoires (17) se déplaçant conjointement sur la surface de support jusqu'à ce que deux surfaces internes parallèles des deux mâchoires jouxtent deux troisièmes surfaces latérales opposées de la marchandise en vrac, la troisième mesure de la marchandise en vrac étant effectuée.

10. Procédé selon l'une des revendications 1 à 9, **caractérisé en ce qu'**une identification de la marchandise en vrac est saisie pendant que la marchandise en vrac se trouve sur la surface de support.

11. Procédé selon la revendication 10, **caractérisé en ce qu'**une identification est saisie, à l'aide d'une identification lisible de façon optique d'une installation de lecture installée à la surface de la marchandise en vrac.

12. Procédé selon la revendication 10, **caractérisé en ce que** l'identification est saisie par lecture d'un RFID-Tag ordonné à la surface de la marchandise en vrac.

13. Procédé selon la revendication 11 ou 12, **caractérisé en ce que** l'identification est saisie au cours de l'étape a) ou b) et qu'à l'aide de l'identification saisie, des données de dimension sont enregistrées dans une base de données et les mesures relevées vérifiées à l'aide des données de mesure.

14. Dispositif de mesure d'une marchandise en vrac (3) essentiellement parallélépipédique avec six surfaces de délimitation et pour la mise à disposition de la marchandise en vrac (3) à une position prédéfinie et dans une orientation prédéfinie, comportant :
un plateau de chargement rotatif (11) avec une surface de support pour la réception de la marchandise en vrac, la partie supérieure du plateau de chargement formant la surface de support étant constitué de sorte que la marchandise en vrac puisse être déplacée dessus,
une installation de convoyage (2, 12) pour le convoyage de la marchandise en vrac individuelle sur le plateau de chargement rotatif (11),
une paire de mâchoires (17) se déplaçant conjointement sur une surface de support 10 dans une première direction et se séparant, s'étendant sur toute la largeur du plateau de chargement dans une deuxième direction perpendiculaire à la première direction, les mâchoires étant accouplées à une installation de détermination de l'espace des surfaces internes parallèles des deux mâchoires,
un dispositif de rotation de la marchandise en vrac autour d'un axe parallèle à la surface de support et,
une installation de pilotage qui est accouplée avec un entraînement du plateau de chargement, l'entraînement des mâchoires, l'installation de saisie de l'espace des surfaces internes des mâchoires et l'installation de prise.

15. Dispositif selon la revendication 14, **caractérisé en ce qu'**une installation de prise comporte deux mâchoires de prise (18), chacune des mâchoires de prise (18) étant ordonnée au centre de la mâchoire (17) correspondante de telle sorte que la surface orientée vers l'intérieur de la mâchoire de prise (18) est essentiellement ordonnée sur un niveau avec la surface de la mâchoire (17) orientée vers l'intérieur.

16. Dispositif selon la revendication 14 ou 15, **caractérisé en ce que** le plateau de chargement (11) est pivotant de telle façon qu'une marchandise en vrac agrippée par les mâchoires de prise (19) peut effectuer une rotation autour d'un axe parallèle à la surface de support, sans que l'installation de prise ait besoin d'être levée avec la marchandise en vrac.
